# EUROPEAN PATENT APPLICATION

(11) **EP 2 113 299 A1**
(43) Date of publication of application: **04.11.2009**
(21) Application number: 09005668.0
(22) Date of filing: 22.04.2009
(51) Int. Cl.: B01J 8/18, B01J 8/24, B01J 8/26, B01J 8/38, B01J 38/00, C10G 11/18

(54) **Improved operation of catalyst withdrawal wells with packing**

(30) Priority: 23.04.2008 US 148918
(71) Applicant: Stone & Webster Process Technology, Inc., Houston, TX 77077 (US)
(72) Inventor: The designation of the inventor has not yet been filed
(74) Representative: Schupfner, Georg

(57) **Abstract**

An improved fluidized catalyst withdrawal well containing packing or other structured internals is disclosed for improving the flow of particular solids between two apparatus, such as between a catalyst regenerator and a riser reactor.

## Description

### FIELD OF THE INVENTION

The present invention relates to an improved catalyst withdrawal well containing packing or other structured internals for improving the flow of particular solids between two apparatus, such as between a catalyst regenerator and a riser reactor and the improved operation of a catalyst withdrawal well. More particularly, the present invention relates to a catalyst withdrawal well for use in transporting regenerated catalyst from a catalyst regenerator to a riser reactor in an FCC system. Most particularly, the present invention relates to a fluidized catalyst withdrawal well that contains packing or baffles.

Catalytic cracking processes for catalytically cracking hydrocarbon feedstocks to more valuable hydrocarbons, such as gasoline and olefins, have been known for decades. Typically, in fluid catalytic cracking processes, hot regenerated catalyst and feedstock (and optionally steam or other diluent gas) are fed into the bottom of a riser reactor wherein the feedstock is cracked at catalytic cracking conditions to produce cracked products and spent catalyst. The spent catalyst typically is contaminated with coke and other hydrocarbon impurities from the cracking process. The cracked products and spent catalyst are separated in a separating system and the cracked product is withdrawn for downstream processing. The separated spent catalyst are discharged to a dense catalyst bed in a disengager vessel, wherein they are contacted with a stripping medium, typically steam, to remove volatile hydrocarbon products from the catalyst. The spent catalyst containing coke then passes through a stripper standpipe to enter a catalyst regenerator where, in the presence of air and at combustion conditions, the coke is burned off of the catalyst to produce hot regenerated catalyst and flue gas. The flue gas is separated from the regenerated catalyst, such as by cyclones, and withdrawn from the regenerator vessel. The hot regenerated catalyst is collected in a dense fluidized bed in the regenerator and then withdrawn through a standpipe for recycle to the riser reactor.

Because the catalyst provides both the catalytic activity and the heat for the catalytic reaction, proper catalyst circulation through the system is important to the overall performance of the FCC unit.

The main drive for catalyst circulation comes from stable and adequate pressure build-up in the withdrawal standpipe. The prior art has attempted to address standpipe design.

A number of catalytic cracking patents do not describe any particular standpipe configuration in catalyst regeneration for hydrocarbon treatment processes, describing simply a standpipe. See, for example, United States Patent Nos. 5,143,875; 4,431,856; 4,238,631; 2,700,639; 2,784,826; 2,860,102; 2,761,820 and 2,913,402.

Conical standpipe inlet hoppers for reducing gas entrainment in the standpipe, for both stripper standpipe and regenerator standpipes, are known in the art. However, the concept by which these hoppers reduced gas entrainment, coalescence of bubbles, was inefficient.

More recently, Chen et al., in United States Patent Nos. 6,228,328 and 6,827,908, described a fluidized withdrawal well. These withdrawal wells serve as a holding tank and reconditioning bed for catalyst before entering the regenerated catalyst standpipe. The withdrawal well attempts to prepare the catalyst for smooth flow through the standpipe by making the transition from a bubbling bed regime to a dense phase regime. The withdrawal well normally has one or more fluidization rings located close to the bottom tangent line. The purpose of the rings is to condition the regenerated catalyst prior to entering the top of the standpipe. Sometimes the catalyst entering the withdrawal well is not taken from the well fluidized region in the regenerator. Consequently, the catalyst enters the withdrawal well as de-fluidized catalyst. This de-fluidized catalyst, however, has proven difficult to effectively re-aerate with fluidization rings alone in the fluidized withdrawal wells of the prior art. This inefficiency leads to a poor pressure build up in the regenerated catalyst standpipe.

Thus, there still remains a need in the art to provide an improved apparatus that overcomes the deficiencies of the prior art catalyst withdrawal wells.

### SUMMARY OF THE INVENTION

The present inventors have found that the presence of internal structures in the withdrawal well, such as single or multiple layers of packing or baffles, located above and/or below the fluidization rings overcomes the deficiencies of the prior art.

The packing and/or baffles break up de-fluidized catalyst that enter the withdrawal well as "clumps" or catalyst by redistributing the catalyst and mixing it up in the bed. The structured packing or baffles also promotes more even distribution of the fluidization gas as it travels counter-current to the catalysts inside the withdrawal well internals. The catalyst exiting the packed zone is well aerated and uniform in density. The internals therefore re-distribute the catalyst and more evenly re-aerate the catalyst prior to entry into the standpipe. The pressure build up in the standpipe improves because the standpipe will operate in fluidized regime instead of packed bed regime.

Further, the improved density uniformity provided by the present invention enables the density of the catalyst entering the standpipe to be higher than in the prior art designs and, in fact, can be adjusted by adjusting the aeration rate to give a higher density, which provides benefits. The higher standpipe density provides more standpipe head pressure and therefore a higher delta P across the regenerated catalyst slide valve. Also, the higher density means less entrained gases going to the reactor. The entrained gases from the regenerator are largely non-condensables (N₂ and CO₂) that add to the wet gas compressor load. Moreover, if excess oxygen is being used in the regenerator, then less oxygen will be entrained into the reactor as well, resulting in the production of less undesirable products in the gasoline and sour water.

### DETAILED DESCRIPTION OF THE DRAWINGS

FIG. 1 is a schematic plan view of a reactor/catalyst stripper system for the fluidized catalytic cracking of hydrocarbons incorporating the catalyst withdrawal well of the present invention.
FIG. 2 is a detailed schematic plan view of the withdrawal well of the present invention.

### DETAILED DESCRIPTION OF THE PRESENT INVENTION

The present invention will be described in the context of a withdrawal well between a catalyst regenerator and a riser reactor, although the concept is applicable to wells between other vessels, such as between a stripper and the catalyst regenerator.

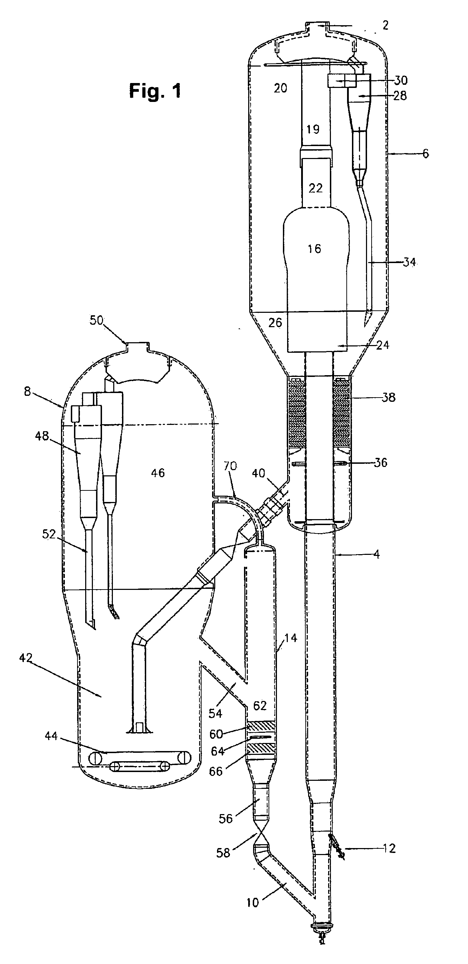

Referring to Figure 1, there is shown a fluidized catalytic cracking system 2 comprised of a riser reactor 4, disengager vessel 6 and regenerator 8. In general operation, hot regenerated catalyst from standpipe 10 enters the riser reactor 4 wherein it is contacted with hydrocarbon feedstock supplied through nozzle 12. As will be appreciated by those skilled in the art, fluidized catalyst cracking system 2 is general in nature showing the riser 4 internal to the disengager 6, but it could be external as well. Likewise, any feedstock nozzle configuration may be employed. It is not the configuration of the fluid catalytic cracking system that is critical to the present invention. Rather it is the employment of the improved catalyst withdrawal well 14 described more fully herein below.

Returning to Figure 1, in the riser reactor 4, the hydrocarbon feedstock is contacted with the hot regenerated catalyst at catalytic cracking conditions known to those skilled in the art to produce spent catalyst and cracked products. The top of the riser is connected via an internal transfer conduit to a separation system 16. Again, any separation system known to those skilled in the art, such as but not limited to rough cut, closed system, open system, close coupled system etc, may be employed in the practice of the present invention. The separation system 16 separates spent catalyst from the cracked gases with the cracked gases entering the reactor cyclones 28 via a connecting conduit 22, 19 and 30. The separated catalyst leaves the separator 16 via dipleg 24 and enter the dense bed of catalyst 26.

Cracked vapors are drawn into cyclone 28 through inlet 30 to separate entrained fines and the product vapor exits the disengager vessel through line 32 for downstream processing. Additional separated catalyst are withdrawn through dipleg 34 and directed to the dense bed 26.

The dense bed 26 is fluidized and acts as a steam stripper with steam supplied through steam ring 36. Baffles or packing 38 may also optionally be employed in the stripper/dense bed 26 as is known to those skilled in art. The stream stripping removes volatile hydrocarbons from the catalyst, which exit the dense bed 26, are routed through a separate chamber in the separation system where it combines with the cracked vapors from the separator before entering the connecting duct 22.

Stripped spent catalyst is withdrawn from the dense bed via standpipe 40. Standpipe 40 may comprise any standpipe known to those skilled in the art. Additionally, although not shown in Figure 1, it is contemplated by present invention that the catalyst withdrawal wells of the present invention may be employed in conjunction with this stripper standpipe 40, in the same manner as that employed with the regenerator standpipe 14, described herein below.

Figure 1 shows a single stage regenerator 8 for convenience. Any regenerator configuration known to those skilled in the art can be employed in the practice of the present invention and the invention is not limited to single stage regenerators. Stripped catalyst enters a dense fluidized bed 42 where the catalyst is contacted with oxygen through air ring 44. The coke is burned to produce a flue gas which leaves the dense bed 42 and enters the upper dilute phase 46 of regenerator 8. Entrained catalyst particles are removed in cyclone separator 48, with the flue gas exiting via line 50 and separated catalyst returned to the dense bed via dipleg 52.

The regenerated catalyst are withdrawn from the regenerator via pipe 54 and enter the catalyst withdrawal well 14 of the present invention. The catalyst withdrawal well 14 provides for substantially uniform distribution of regenerated catalyst inside the well, substantially uniform re-fluidization of the de-fluidized bed, reduction of bubble re-entrainment into the standpipe, greater pressure recovery in the regenerated catalyst standpipe 56 (and across slide valve 58) and improved catalyst circulation, by the provision of internals in the well.

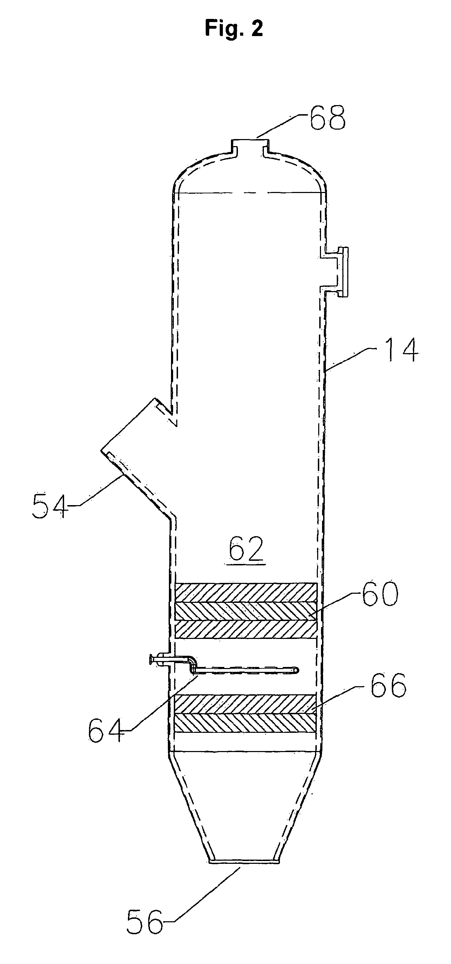

The catalyst withdrawal well is provided with internals 60. As shown in Figure 2, withdrawal well 14 receives regenerated catalyst from pipe 54. The catalyst fall through open space to the internals, in the case of Figure 2, two layers of packing located above fluidization air ring 64. The number of layers of packing above air ring 64 can vary between 1 and 12, but from about two to seven are preferred, with from about 2 to 5 especially preferred.

The type of packing can also vary, with KFBE^{™} from Koch Glitsch being typical. Other types of internals, such as baffles, may also be employed, or a combination of baffles and packing.

The amount of space 62, above the internals and below the regenerated catalyst entry point may also vary, but preferably is from 1 to 10 feet and provides room for catalyst flow.

Additional packing 66 or other internals may also be included below the fluidization gas distributor, with about 2-3 layers of packing being preferred. The fluidization gas may comprise steam, nitrogen, air, other inert gases or fuel gas. The fluidization rings can be single or multi-rings or comprise a grid of pipe spargers. A vent 68 is provided at the top of well 14 in order to remove excess fluidization gas with return to the dilute phase 46 of the regenerator 8 via a line 70.

The regenerated catalyst is then withdrawn from the well 14 through standpipe 56 for recirculation to the riser reactor 4 through slide valve 58 and standpipe 10.

The diameter of the withdrawal well and standpipe are sized in such a way that the velocity of the catalyst in the well ranges from 0.1 to 2.5 feet/sec and velocity in the standpipe ranges from 3 to 12 feet/sec.

The above-mentioned patents are hereby incorporated by reference.

Many variations of the present invention will suggest themselves to those skilled in the art in light of the above-detailed description. All such obvious modifications are within the full intended scope of the appended claims.

## Claims

1. A catalyst withdrawal well comprising a receiving well, said receiving well comprising a catalyst inlet, a vapor outlet, a fluidization system and a catalyst outlet wherein
• said catalyst inlet is located on at least one side of said receiving well,
• said vapor outlet is located toward the upper end of said receiving well,
• said fluidization system is located toward the bottom of said receiving well,
• said catalyst outlet is located below said fluidization system,
and wherein said catalyst withdrawal well comprises internal flow improving structures below said catalyst inlet and above said fluidization system.

2. A catalyst withdrawal well as defined in Claim 1 wherein said internal structures comprise baffles.

3. A catalyst withdrawal well as defined in Claim 1 wherein said internal structures comprise packing.

4. A catalyst withdrawal well as defined in Claim 3 wherein the packing comprises from 2 to about 9 layers of packing.

5. A catalyst withdrawal well as defined in at least one the preceding Claims which receives regenerated catalyst from a catalyst regenerator, wherein said vapor outlet is operatively connected to an upper dilute phase of said catalyst regenerator and said catalyst outlet is operatively connected to a riser reactor.

6. A catalyst withdrawal well as defined in at least one the preceding Claims which receives stripped catalyst from a catalyst stripper in a disengager vessel, wherein said vapor outlet is operatively connected to an upper dilute phase of said disengager vessel and said catalyst outlet is operatively connected to a regenerator.

7. A catalyst withdrawal well as defined in at least one the preceding Claims further comprising internal structures located below said fluidization system and above said catalyst outlet.

8. A catalyst withdrawal well as defined in Claim 7 wherein said internal structures located below said fluidization system and above said catalyst outlet comprise baffles, structured packing or a mixture thereof.

9. A catalyst withdrawal well as defined in Claim 7 or 8 wherein said structured packing or internal structures located below said fluidization system an above said catalyst outlet comprise(s) from 1 to 5 layers of structured packing.

10. A catalyst withdrawal well as defined in at least one the preceding Claims wherein the diameter of the withdrawal well is sized to provide a velocity of the catalyst in the well ranging from 0.1 to 2.5 feet/sec.

11. A catalyst withdrawal well as defined in at least one the preceding Claims wherein the diameter of the standpipe is sized to provide a velocity of the catalyst in the standpipe ranging from 3 to 12 feet/sec.

12. A catalyst withdrawal well as defined in Claim 11 wherein the diameter of the standpipe is sized to provide a velocity of the catalyst in the standpipe ranging from 4 to 10 feet/sec.
